# FASCICULE DE BREVET EUROPEEN

(11) **EP 3 024 731 B1**
(45) Date de publication et mention de la délivrance du brevet: **24.05.2017**
(21) Numéro de dépôt: 14755875.3
(22) Date de dépôt: 25.07.2014
(51) Int. Cl.: B64F 1/36

(54) **INSTALLATION DE CONTRÔLE DU TRANSFERT DE BAGAGES**
STEUERUNGSANLAGE ZUR GEPÄCKHANDHABUNG
LUGGAGE HANDLING CONTROL INSTALLATION

(30) Priorité: 25.07.2013 FR 1357335
(43) Date de publication de la demande: 01.06.2016
(73) Titulaire: SBS, 26100 Romans-sur-Isère (FR)
(72) Inventeur: SAFIR, André, F-92500 Rueil-Malmaison (FR)
(74) Mandataire: Gendron, Vincent Christian
(86) Numéro de dépôt international: PCT/FR2014/051938
(87) Numéro de publication internationale: WO 2015/011426

(56) Documents cités:
- EP-A2- 0 520 455
- FR-A1- 2 975 078
- US-A1- 2006 022 090

## Description

La présente invention se rapporte à une installation de contrôle du transfert de bagages dans un espace de transfert, notamment mais non exclusivement, pour le transport aérien.

Un domaine d'application envisagé est celui du contrôle de transfert de bagages dans une aérogare, entre l'enregistrement d'un bagage par le passager et la récupération dudit bagage dans une autre aérogare après le vol.

L'efficacité du traitement et du contrôle des bagages au sol permet d'augmenter le taux de rotation des avions et partant, de diminuer le coût de transport unitaire des passagers.

Généralement, dès après l'enregistrement dans l'aérogare, les bagages échappent au contrôle des passagers, et ils sont véhiculés sur des bandes transporteuses pour être contrôlés puis déposés en vrac dans des conteneurs. Ces conteneurs sont ensuite eux-mêmes transportés près de l'avion et chargés dans sa soute.

Compte tenu, d'une part des nombreux types de bagages, tant par la forme que par le poids, et d'autre part de l'importance des moyens de transfert à mettre en oeuvre entre l'enregistrement et l'avion, il est malaisé d'envisager une gestion rationnelle de ces bagages en vue d'une automatisation et d'une optimisation de l'espace disponible.

Aussi, il a été imaginé de rendre les bagages plus homogènes en termes de dimension de manière à pouvoir les transporter par paquets dans des conteneurs. Ceux-ci sont alors installés sur des bâtis d'entreposage de manière à pouvoir, d'une part les mettre à disposition des passagers dans les aérogares, et d'autre part les véhiculer jusqu'à l'avion. Il a également été imaginé d'identifier chacun des bagages au moyen d'une étiquette RFID codée et de conditionner l'insertion ou le retrait du bagage à la reconnaissance du code de l'étiquette

On pourra se référer au document FR2975078, lequel décrit une telle installation. Cependant, il s'est avéré nécessaire d'améliorer plus encore la sûreté des conditions de chargement et de retrait des bagages par les passagers et de réduire les coûts de ces installations de contrôle de transfert.

Aussi, un problème qui se pose et que vise à résoudre la présente invention, est de fournir une installation de transfert plus sûre.

Dans ce but, la présente invention propose une installation de contrôle du transfert de bagages dans un espace de transfert pour le transport aérien, comprenant ledit espace de transfert, celui-ci présentant une entrée de réception pour recevoir une pluralité de bagages et une sortie d'évacuation pour évacuer ladite pluralité de bagages, ladite installation comprenant en outre une pluralité de dispositifs de verrouillage, chacun desdits dispositifs de verrouillage étant apte à être monté sur un bagage de ladite pluralité de bagages pour pouvoir maintenir chacun desdits bagages verrouillé, lorsque lesdits bagages sont reçus à ladite entrée de réception. Selon l'invention, chacun desdits dispositifs de verrouillage comprend un émetteur de contrôle apte à émettre un signal d'identification et un signal de déverrouillage lorsque ledit dispositif de verrouillage est déverrouillé, tandis que ledit espace de transfert comporte des récepteurs de contrôle pour pouvoir recevoir, d'une part ledit signal d'identification pour fournir la position du dispositif de verrouillage à l'intérieur dudit espace de transfert, et d'autre part ledit signal de déverrouillage.

Ainsi, une caractéristique de l'invention réside dans la mise en oeuvre d'un dispositif de verrouillage équipé d'un émetteur de contrôle, lequel est adapté à émettre dans l'espace de transfert, à la fois un signal d'identification et un signal relatif à son état, verrouillé ou déverrouillé. Préférentiellement, le signal d'identification est continu, tandis que le signal relatif à son état n'est émis que lorsque le dispositif de verrouillage est déverrouillé. En outre, l'espace de transfert est équipé de récepteurs de contrôle aptes à recevoir les signaux émis par l'émetteur de contrôle, de manière à pouvoir détecter à l'intérieur de l'espace de transfert, à la fois si le dispositif de verrouillage est dans un état déverrouillé, et par conséquent si le bagage a été ouvert, et la position du dispositif de verrouillage et partant, du bagage ainsi ouvert.

De la sorte, à partir de l'entrée de réception de l'espace de transfert, où le bagage est vérifié et est scellé grâce au dispositif de verrouillage, et jusqu'à la sortie d'évacuation, le bagage, par l'intermédiaire du dispositif de verrouillage équipé, est à la fois repéré dans l'espace de transfert, mais au surplus son état ouvert ou fermé est signalé. Il en est bien évidemment de même, simultanément pour tous les bagages scellés circulant dans l'espace de transfert. Une telle installation permet d'améliorer la sûreté du contrôle des bagages dans les aérogares. On observera que les bagages sont acheminés par leur propriétaires eux-mêmes, de l'entrée de réception jusqu'à la sortie d'évacuation, ce qui permet de réduire les coûts de manutention des bagages.

Selon un mode de mise en oeuvre de l'invention particulièrement avantageux, l'installation comprend en outre, un émetteur déclencheur situé à ladite entrée de réception pour pouvoir émettre un signal d'activation dudit émetteur de contrôle de chacun desdits dispositifs de verrouillage. Ainsi, l'émetteur de contrôle logé dans le dispositif de verrouillage, émets des signaux d'identification et des signaux sur l'état verrouillé ou déverrouillé du dispositif de verrouillage, dès l'entrée de réception et de préférence, après que le contenu des bagages a été vérifié.

De plus, ledit émetteur déclencheur est, de préférence, apte à émettre en outre, un signal de chargement représentatif dudit signal d'identification. De la sorte, les informations concernant le porteur du bagage et sa destination, peuvent être chargées automatiquement dans l'émetteur de contrôle, afin qu'il puisse ensuite émettre le signal d'identification dans l'espace de transfert.

Selon un mode de réalisation de l'invention particulièrement avantageux, l'installation comprend en outre une pluralité d'emplacements ordonnés situés au voisinage de ladite sortie d'évacuation, chacun des emplacements étant apte à recevoir un seul bagage équipé d'un dispositif de verrouillage. Ainsi, chaque propriétaire de bagage, ou passager, vient porter lui-même son bagage à l'intérieur d'un emplacement qui est par exemple pré-réservé, dès la réception du bagage à l'entrée de réception, et par exemple simultanément à l'émission du signal de chargement représentatif du signal d'identification.

De plus, l'installation comprend en outre des récepteurs d'emplacement pour pouvoir fournir la position relative desdits dispositifs de verrouillage identifiés à l'intérieur desdits emplacements. Les récepteurs d'emplacement sont situés au voisinage de la sortie d'évacuation, et ils permettent d'identifier les organes de verrouillage et leur bagage correspondant, grâce au signal d'identification qu'ils émettent, mais aussi leur position dans les emplacements. Ainsi, il aisé de vérifier, que chaque bagage présenté à l'entré de réception est bien présent dans l'emplacement qui lui a été attribué, à la sortie d'évacuation. Au surplus, il a pu être vérifié, qu'entre l'entrée de réception et la sortie d'évacuation, les bagages n'ont pas été ouverts. De la sorte, le transfert des bagages, bien qu'il soit réalisé en partie par leur propriétaire dans la zone de transfert, est entièrement sous contrôle.

Préférentiellement, l'installation comprend un bâti d'entreposage situé au voisinage de ladite sortie d'évacuation, ladite pluralité d'emplacements étant formée à l'intérieur dudit bâti d'entreposage. Le bâti d'entreposage est alors équipé des récepteurs d'emplacement, ce qui permet une meilleure localisation des dispositifs de verrouillage et par conséquent, des bagages associés.

On observera que le mode de localisation des dispositifs de verrouillage dans l'espace de transfert, au moyen des récepteurs de contrôle est moins précis que celui des récepteurs d'emplacement. Les récepteurs de contrôle et les émetteurs de contrôle communiquent entre eux par l'intermédiaire d'un protocole d'ondes électromagnétiques, à une fréquence donnée, et par exemple de radiofréquences, tandis que les récepteurs d'emplacement et les émetteurs de contrôle communiquent entre eux par l'intermédiaire d'un protocole d'ondes électromagnétiques de basses fréquences.

Avantageusement, l'installation comprend en outre des conteneurs, et lesdits emplacements ordonnés sont ménagés à l'intérieur desdits conteneurs. Ainsi, les conteneurs à l'intérieur desquels sont ménagés les emplacements ordonnés, sont destinés à être installés selon une direction longitudinale, à l'intérieur du bâti d'entreposage. Les conteneurs et les emplacements sont ouverts latéralement, et le bâti est lui-même ouvert, de manière à ce que les passagers puissent eux-mêmes charger latéralement leur bagage à l'intérieur des emplacements. Lorsque le chargement des conteneurs est terminé, ils sont extraits du bâti, selon ladite direction longitudinale pour être ensuite transférés vers la soute d'un avion.

Selon un mode de réalisation de l'invention particulièrement avantageux, lesdits dispositifs de verrouillage comprennent chacun un contenant présentant une ouverture apte à recevoir un bagage, et un organe de condamnation pour pouvoir condamner ladite ouverture. De la sorte, à l'entrée de réception, les bagages sont insérés chacun à l'intérieur d'un contenant à travers l'ouverture. Et l'ouverture est refermée, par exemple au moyen d'une fermeture à glissières, puis condamnée au moyen de l'organe de condamnation, qui interdit l'ouverture du contenant.

En outre, ledit émetteur de contrôle est logé dans ledit organe de condamnation. De la sorte, après la mise en place de l'organe de condamnation, le bagage et le contenant sont présentés au voisinage de l'émetteur déclencheur afin qu'en émettant des signaux d'un protocole de communication adapté, il puisse transmettre à l'émetteur de contrôle, le signal d'activation de l'émetteur de contrôle et le signal représentatif du signal d'identification. Le bagage est alors sous contrôle grâce aux récepteurs de contrôle.

Selon un mode de réalisation particulièrement avantageux, ledit contenant présente une paroi à double enveloppe étanche dépressurisée, tandis que ledit émetteur de contrôle est en outre adapté à fournir un signal de pression auxdits récepteurs de contrôle lorsque la pression de ladite paroi à double enveloppe augmente. Ainsi, lorsque la paroi à double enveloppe est perforée, la pression augmente à l'intérieur de l'enveloppe, et provoque l'activation de l'émetteur de contrôle, qui, de manière identique au cas du déverrouillage, transmet un signal d'effraction, lequel est recueilli par les récepteurs de contrôle.

Selon un autre aspect, l'invention concerne une méthode de contrôle du transfert de bagages dans un espace de transfert pour le transport aérien, ledit espace de transfert présentant une entrée de réception pour recevoir une pluralité de bagages et une sortie d'évacuation pour évacuer ladite pluralité de bagages, ladite méthode étant du type selon laquelle, on fournit en outre une pluralité de dispositifs de verrouillage, chacun desdits dispositifs de verrouillage étant apte à être monté sur un bagage de ladite pluralité de bagages pour pouvoir maintenir chacun desdits bagages verrouillé, lorsque lesdits bagages sont reçus à ladite entrée de réception. Selon l'invention, on équipe chacun desdits dispositifs de verrouillage d'un émetteur de contrôle apte à émettre un signal d'identification et un signal de déverrouillage lorsque ledit dispositif de verrouillage est déverrouillé, et on fournit des récepteurs de contrôle dans ledit espace de transfert pour pouvoir recevoir, d'une part ledit signal d'identification pour fournir la position du dispositif de verrouillage à l'intérieur dudit espace de transfert, et d'autre part ledit signal de déverrouillage.

Selon un autre objet, la présente invention propose une installation de contrôle du transfert de bagages dans un espace de transfert pour le transport aérien, ledit espace de transfert présentant une entrée de réception pour recevoir une pluralité de bagages et une sortie d'évacuation pour évacuer ladite pluralité de bagages, ladite installation comprenant en outre une pluralité de dispositifs de verrouillage, chacun desdits dispositifs de verrouillage étant apte à être monté sur un bagage de ladite pluralité de bagages pour pouvoir maintenir chacun desdits bagages verrouillé, lorsque lesdits bagages sont reçus à ladite entrée de réception ; ladite installation comprenant en outre une pluralité d'emplacements ordonnés situés au voisinage de ladite sortie d'évacuation, chacun des emplacements étant apte à recevoir un bagage équipé d'un dispositif de verrouillage, tandis que chacun desdits dispositifs de verrouillage comprend un émetteur de contrôle apte à émettre un signal d'identification, ladite installation comprenant en outre des récepteurs d'emplacement pour pouvoir fournir la position relative desdits dispositifs de verrouillage identifiés à l'intérieur desdits emplacements.

Selon cet autre objet, ledit émetteur de contrôle est apte à émettre un signal de déverrouillage lorsque ledit dispositif de verrouillage est déverrouillé, tandis que ledit espace de transfert comporte des récepteurs de contrôle pour pouvoir recevoir, d'une part ledit signal d'identification pour fournir la position du dispositif de verrouillage à l'intérieur dudit espace de transfert, et d'autre part ledit signal de déverrouillage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est un synoptique de fonctionnement d'une installation de contrôle de transfert de bagages selon l'invention ;
- la Figure 2 est une vue de détail de la Figure 1 ; et,
- la Figure 3 est une vue schématique d'une installation de contrôle de transfert de bagages selon l'invention.

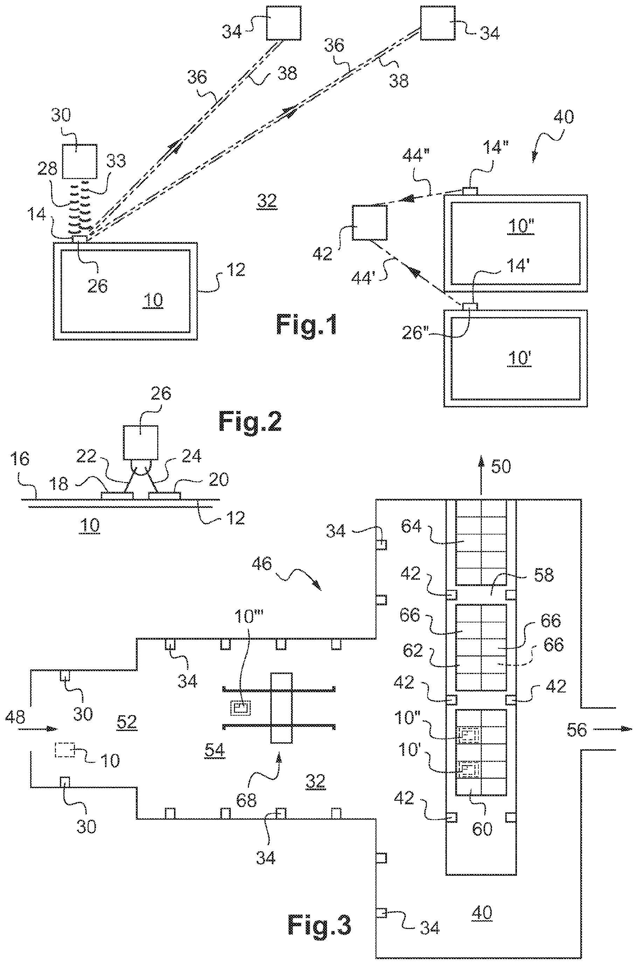

La Figure 1 illustre une première valise 10, ou bagage, logée à l'intérieur d'un contenant 12, lequel est refermé par un organe de condamnation 14. Le contenant 12 et l'organe de condamnation 14 forment un dispositif de verrouillage apte à verrouiller le bagage 10. Le contenant 12 est formé d'un sac adapté à la forme et à la taille des bagages communs les plus volumineux. Les parois du sac sont réalisées dans un matériau polymère renforcé très résistant à l'impact d'un élément pointu et/ou tranchant. On décrira dans la suite de la description une variante d'exécution de la paroi du sac du contenant 12 permettant d'améliorer plus encore les conditions de sûreté. Le sac 12 présente une ouverture refermée par une fermeture à glissière 16 comportant deux curseurs 18, 20 illustrés en détail sur la Figure 2. Les curseurs présentent respectivement des tirettes 22, 24, percées, et solidarisées au moyen d'un cadenas électronique 26 représenté schématiquement sur la figure 2. Aussi, le dispositif de verrouillage, et en particulier l'organe de condamnation 14, comprend le cadenas électronique 26.

Le cadenas électronique 26 inclut une radio-étiquette, ou transpondeur, appartenant à la catégorie des étiquettes actives, lesquelles comportent au surplus une batterie d'accumulateurs permettant de les alimenter en énergie. La radio-étiquette comporte un circuit intégré, ou puce électronique, associé à une antenne. Ainsi, la radio-étiquette va non seulement pouvoir recevoir des signaux, mais aussi, à partir d'un émetteur de contrôle, émettre un signal d'identification continu sans qu'elle ait besoin d'être alimentée à distance par le signal d'un lecteur-récepteur.

Au surplus, de par sa nature, le cadenas électronique 26 relie mécaniquement les deux tirettes 22, 24, et dès lors que ce lien est rompu, la radio-étiquette est apte à émettre, à partir dudit émetteur de contrôle, un autre signal, un signal de déverrouillage, indiquant l'effraction potentielle du contenant 12 et partant, celle du bagage 10.

La radio-étiquette peut demeurée dans un état de sommeil, c'est-à-dire qu'elle n'émet aucun signal. En revanche, elle est susceptible de recevoir un signal d'activation provenant d'un émetteur déclencheur, permettant d'activer notamment l'émetteur de contrôle. Outre l'activation, l'émetteur déclencheur est apte à fournir à la mémoire de l'émetteur de contrôle, un signal de chargement représentatif d'éléments d'identification portant notamment sur le propriétaire du bagage et sur son programme de voyage et en particulier de vol, s'agissant du transport aérien.

Selon un mode préféré de mise en oeuvre de l'invention, l'émetteur déclencheur transmet des signaux électromagnétiques selon un mode haute fréquence, au circuit intégré de la radio-étiquette. Usuellement, pour les radio-étiquettes, le domaine des hautes fréquences utilisé est de 13,56 MHz. Par ce biais, l'émetteur déclencheur émet des signaux aptes à activer l'émetteur de contrôle et à transmettre les éléments d'identification à la mémoire de l'émetteur de contrôle, afin qu'il puisse émettre un signal d'identification correspondant.

Toutefois, l'émetteur de contrôle émet un signal d'identification, non plus en haute fréquence, mais selon un mode de radiofréquence, et en particulier dans la bande de fréquences de 2,45 GHz. De la même façon, le signal de déverrouillage est émis, lorsqu'il est émis, dans la même bande de fréquences.

Ainsi, en se reportant de nouveau sur la figure 1, on décrira en détail les possibilités d'émission et de réception de la radio-étiquette du cadenas électronique 26 faisant parti de l'organe de condamnation 14, et ce dans un environnement donné. On décrira ensuite en référence à la figure 3 un exemple d'environnement lié au transfert des bagages à l'intérieur d'une aérogare.

Ainsi, la radio-étiquette du cadenas électronique 26 est susceptible de recevoir un signal d'activation 28 provenant d'un émetteur déclencheur 30 installé en position fixe à l'intérieur d'un espace de transfert donné 32. Par conséquent, dès après que le bagage 10 a été verrouillé par le contenant 12 et l'organe de condamnation 14, on vient activer l'émetteur de contrôle de la radio-étiquette. Au surplus, l'émetteur déclencheur 30 fournit, par l'intermédiaire d'un signal de chargement 33, à la mémoire de l'émetteur de contrôle, les éléments d'identification du bagage 10. Ensuite, le bagage 10 est destiné à être acheminé à l'intérieur de l'espace de transfert 32, par le porteur du bagage lui-même.

L'espace de transfert 32 est en outre équipé de récepteurs de contrôle 34, installés en position fixe de préférence au niveau de la paroi de plafond de l'espace de transfert 32. Ils sont installés de proche en proche de manière à pouvoir couvrir l'ensemble de l'espace de transfert 32. Ainsi, les récepteurs de contrôle 34 reçoivent un signal d'identification 36 depuis l'émetteur de contrôle de la radio-étiquette logée dans le cadenas électronique 26. Grâce au maillage de l'espace de transfert 32, la position du cadenas électronique 26 et par conséquent du bagage 10 à l'intérieur de l'espace de transfert 32, peut être déterminée au mètre près. Au surplus, les récepteurs de contrôle 34 sont aptes à recevoir un signal de déverrouillage 38, lorsque le cadenas électronique 26 est déverrouillé. De la sorte, lorsqu'une tentative d'ouverture du bagage est détectée au moyen du signal de déverrouillage 38, parallèlement, la localisation du bagage 10 à l'intérieur de l'espace de transfert 32 est possible, et une intervention humaine d'un service de sécurité peut être déclenchée afin de vérifier les intentions du propriétaire du bagage.

Bien évidemment, tous les bagages acheminés dans la zone de transfert 32 sont équipés d'un même dispositif de verrouillage, en revanche, leur radio-étiquette est chargée avec des éléments différents d'identification.

À l'intérieur de l'espace de transfert 32, une zone de stockage 40 permet de stocker les bagages équipés avant leur chargement. Dans cette zone de stockage 40, les bagages 10', 10", sont rangés et ordonnés dans des positions relatives. Aussi, cette zone de stockage 40 est équipée de récepteurs d'emplacement 42. L'émetteur de contrôle de la radio-étiquette émet également ses éléments d'identification selon un signal d'identification basse fréquence 44', 44", permettant aux récepteurs d'emplacements 42 de localiser précisément la position des bagages 10', 10", les uns par rapport aux autres, grâce aux orientations et aux intensités des signaux basse-fréquence 44', 44" reçus. Cette localisation est alors possible avec une précision de l'ordre du centimètre.

On se reportera maintenant sur la figure 3 montrant partiellement un hall d'aérogare 46, lequel présente une entrée de réception 48 et une sortie d'évacuation opposée 50. Le hall d'aérogare 46 défini l'espace de transfert 32 lequel est divisé en trois zones ; une zone de verrouillage des bagages 52, une zone de contrôle des bagages 54 et la zone de stockage 40. À l'entrée de réception 48, les passagers munis de leur bagage pénètrent dans la zone de verrouillage des bagages 52. À partir de la zone de stockage 40, les bagages équipés seront évacués à travers la sortie d'évacuation 50, tandis que les passagers en ressortent, sans leur bagage, par une sortie passagers 56.

La zone de stockage 40 comporte un bâti d'entreposage 58 longitudinal à l'intérieur duquel sont engagés des conteneurs 60, 62, 64. Le bâti d'entreposage 58, tout comme les conteneurs 60, 62, 64 présentent des ouvertures latérales opposées. Chacun des conteneurs 60, 62, 64, présente à la fois des emplacements superposés est juxtaposés 66, aptes à recevoir chacun un seul bagage 10', 10".

Aussi, on retrouve sur la figure 3, les émetteurs déclencheurs 30 au niveau de la zone de verrouillage des bagages 52, les récepteurs de contrôle 34 au niveau de la zone de contrôle des bagages 54 et de la zone de stockage 40, et aussi les récepteurs d'emplacement 42 sur le bâti d'entreposage 58.

Ainsi, chaque passager muni de son bagage 10 franchit l'entrée de réception 48 et il l'insère à l'intérieur du contenant 12 et le referme au moyen de l'organe de condamnation 14. Le bagage 10 est alors approché à une faible distance de l'émetteur déclencheur 30, à quelques centimètres par exemple, afin, d'activer l'émetteur de contrôle de la radio-étiquette et de lui transmettre des informations d'identification, par exemple au regard de la carte d'embarquement.

Ensuite, le bagage ainsi verrouillé et surveillé, est acheminé par le passager lui-même à l'intérieur de la zone de contrôle des bagages 54. Il est alors introduit par exemple dans un tomographe 68. À la sortie du tomographe 68, le passager reprend son bagage qu'il vient ensuite insérer dans un emplacement 66 de l'un des conteneurs 60, 62, 64. Le bagage et son dispositif de verrouillage jusque-là sous la surveillance des récepteurs de contrôle 34, sont alors au surplus sous la surveillance des récepteurs d'emplacement 42. Il demeure néanmoins actif vis-à-vis des récepteurs de contrôle 34 de manière à pouvoir déceler le signal de déverrouillage.

Tous les passagers viennent ainsi porter leur bagage depuis l'entrée de réception 48 jusqu'à l'emplacement 66 de l'un des conteneurs 60, 62, 64. Entre ces deux points, le bagage et son système de verrouillage sont en surveillance constante quant à leur position et quant à l'état verrouillé ou déverrouillé du dispositif de verrouillage. Au surplus, il est aisé de vérifier que tous les bagages identifiés dans la zone de verrouillage des bagages 52 se retrouvent bien dans les conteneurs 60, 62, 64. De la sorte, si aucun signal de déverrouillage n'a pu être enregistré durant le processus de transfert de tous les bagages, aucun des passagers n'a pu introduire ou extraire un quelconque objet dans ou du bagage.

Ensuite, les conteneurs 60, 62, 64 ainsi que les bagages qu'ils comportent sont évacués à travers la sortie d'évacuation 50. Durant cette évacuation, les radio-étiquettes des cadenas électroniques de tous les bagages sont mis en sommeil. Les conteneurs 60, 62, 64 sont alors aptes à être chargés dans la soute d'un avion.

Après le vol, les conteneurs 60, 62, 64 sont déchargés et installés sur le bâti d'entreposage de l'aérogare de destination. Lors de cette installation, les radio-étiquettes sont réactivées afin que les passagers puissent localiser leurs bagages. En effet, l'aérogare de destination est équipée des mêmes récepteurs d'emplacements 42 et de contrôle 34, et aussi de panneaux d'affichage permettant d'afficher l'emplacement des bagages équipés de leur dispositif de verrouillage dans les emplacements 66 des conteneurs 60, 62, 64. Des après le repérage de leur bagage, les passagers viennent le reprendre et quitte ensuite l'aérogare de destination.

Afin d'améliorer plus encore la sûreté et le contrôle de l'accès des passagers eux-mêmes à leur bagage durant le transfert des bagages, et selon une autre variante d'exécution de la paroi du sac du contenant 12, celle-ci est à double enveloppe étanche. Au surplus, la double enveloppe étanche est dépressurisée et elle est équipée d'un capteur de pression apte à fournir un signal représentatif de la pression interne de la double enveloppe. Le capteur de pression est alors relié à l'émetteur de contrôle, lequel est apte à fournir un signal de pression aux récepteurs de contrôle, lorsque la paroi à double enveloppe est perforée et que sa pression interne augmente. Ainsi, si la paroi du sac du contenant 12 est perforée entre la zone de verrouillage des bagages 52 et la zone de stockage 40, les récepteurs de contrôle 34 détectent un signal d'effraction. Il est alors possible de détecter la position du dispositif de verrouillage dans l'espace de transfert 32.

La mise en dépression de la paroi à double enveloppe est plus avantageuse qu'une mise en pression pour des raisons d'encombrement. En revanche, la mise en dépression tend à faire s'appliquer l'une contre l'autre les deux enveloppes de la paroi et rendre malaisée la détection de la variation de pression. Aussi, on insère à l'intérieur de la paroi à double enveloppe et de proche en proche, des hémisphères protubérants remplis d'air de manière à assurer la libre circulation de l'air sur toute l'étendue de la paroi.

Préférentiellement, le capteur de pression est installé dans le cadenas électroniques lequel est alors maintenu en position fixe contre la paroi.

## Revendications

1. Installation de contrôle du transfert de bagages (10) dans un espace de transfert (32) pour le transport aérien, comprenant ledit espace de transfert (32), celui-ci présentant une entrée de réception (48) pour recevoir une pluralité de bagages et une sortie d'évacuation (50) pour évacuer ladite pluralité de bagages, ladite installation comprenant en outre une pluralité de dispositifs de verrouillage (12, 14), chacun desdits dispositifs de verrouillage étant apte à être monté sur un bagage (10) de ladite pluralité de bagages pour pouvoir maintenir chacun desdits bagages verrouillé, lorsque lesdits bagages sont reçus à ladite entrée de réception (48),
**caractérisée en ce que** chacun desdits dispositifs de verrouillage (12, 14) comprend un émetteur de contrôle apte à émettre un signal d'identification (36) et un signal de déverrouillage (38) lorsque ledit dispositif de verrouillage (12, 14) est déverrouillé, tandis que ledit espace de transfert (32) comporte des récepteurs de contrôle (34) pour pouvoir recevoir, d'une part ledit signal d'identification (36) pour fournir la position du dispositif de verrouillage à l'intérieur dudit espace de transfert (32), et d'autre part ledit signal de déverrouillage (38).

2. Installation de contrôle selon la revendication 1, **caractérisée en ce qu'**elle comprend en outre, un émetteur déclencheur (30) situé à ladite entrée de réception (48) pour pouvoir émettre un signal d'activation (28) dudit émetteur de contrôle de chacun desdits dispositifs de verrouillage (12, 14).

3. Installation de contrôle selon la revendication 2, **caractérisée en ce que** ledit émetteur déclencheur (30) est apte à émettre en outre, un signal de chargement (33) représentatif dudit signal d'identification (36).

4. Installation de contrôle selon l'une quelconque des revendications 1 à 3, **caractérisée en ce qu'**elle comprend en outre une pluralité d'emplacements ordonnés (66) situés au voisinage de ladite sortie d'évacuation (50), chacun des emplacements étant apte à recevoir un bagage (10) équipé d'un dispositif de verrouillage (12, 14).

5. Installation de contrôle selon la revendication 4, **caractérisée en ce qu'**elle comprend en outre des récepteurs d'emplacement (42) pour pouvoir fournir la position relative desdits dispositifs de verrouillage (12, 14) identifiés à l'intérieur desdits emplacements (66).

6. Installation de contrôle selon la revendication 4 ou 5, **caractérisée en ce qu'**elle comprend un bâti d'entreposage (58) situé au voisinage de ladite sortie d'évacuation (50), ladite pluralité d'emplacements (66) étant formée à l'intérieur dudit bâti d'entreposage (58).

7. Installation de contrôle selon l'une quelconque des revendications 4 à 6, **caractérisée en ce qu'**elle comprend en outre des conteneurs (60, 62, 64), et **en ce que** lesdits emplacements ordonnés (66) sont ménagés à l'intérieur desdits conteneurs (60, 62, 64).

8. Installation de contrôle selon l'une quelconque des revendications 1 à 7, **caractérisée en ce que** lesdits dispositifs de verrouillage (12, 14) comprennent chacun un contenant (12) présentant une ouverture apte à recevoir un bagage (10), et un organe de condamnation (14) pour pouvoir condamner ladite ouverture.

9. Installation de contrôle selon la revendication 8, **caractérisée en ce que** ledit émetteur de contrôle est logé dans ledit organe de condamnation (14).

10. Installation de contrôle selon la revendication 8 ou 9, **caractérisée en ce que** ledit contenant (12) présente une paroi à double enveloppe étanche dépressurisée, tandis que ledit émetteur de contrôle est en outre adapté à fournir un signal de pression auxdits récepteurs de contrôle (34) lorsque la pression de ladite paroi à double enveloppe augmente.

## Patentansprüche

1. Steuerungsanlage zur Gepäckhandhabung (10) in einem Transferbereich (32) für den Luftverkehr, umfassend den Transferbereich (32), wobei dieser einen Empfangseingang (48) zum Empfangen einer Vielzahl von Gepäckstücken und einen Abtransportausgang (50) zum Abtransportieren der Vielzahl von Gepäckstücken aufweist, wobei die Anlage ferner eine Vielzahl von Verriegelungsvorrichtungen (12, 14) umfasst, wobei jede der Verriegelungsvorrichtungen zur Befestigung auf einem Gepäckstück (10) aus der Vielzahl von Gepäckstücken geeignet ist, um jedes der Gepäckstücke verriegelt halten zu können, wenn die Gepäckstücke am Empfangseingang (48) angenommen werden,
**dadurch gekennzeichnet, dass** jede der Verriegelungsvorrichtungen (12, 14) einen Steuerungssender umfasst, der zum Senden eines Identifikationssignals (36) und eines Entriegelungssignals (38) geeignet ist, wenn die Verriegelungsvorrichtung (12, 14) entriegelt wird, während der Transferbereich (32) Steuerungsempfänger (34) umfasst, um einerseits das Identifikationssignal (36) zu empfangen, um die Position der Verriegelungsvorrichtung innerhalb des Transferbereichs (32) zu liefern, und andererseits das Entriegelungssignal (38).

2. Steuerungsanlage nach Anspruch 1, **dadurch gekennzeichnet, dass** sie ferner einen Auslösesender (30) umfasst, der sich am Empfangseingang (48) befindet, um ein Aktivierungssignal (28) des Steuerungssenders von jeder der Verriegelungsvorrichtungen (12, 14) senden zu können.

3. Steuerungsanlage nach Anspruch 2, **dadurch gekennzeichnet, dass** der Auslösesender (30) ferner zum Senden eines Ladesignals (33) geeignet ist, das für das Identifikationssignal (36) bezeichnend ist.

4. Steuerungsanlage nach einem der Ansprüche 1 bis 3, **dadurch gekennzeichnet, dass** sie ferner eine Vielzahl von geordneten Abstellplätzen (66) umfasst, die sich in der Nähe des Abtransportausgangs (50) befinden, wobei jeder dieser Abstellplätze zum Aufnehmen eines Gepäckstücks (10) geeignet ist, das mit einer Verriegelungsvorrichtung (12, 14) ausgestattet ist.

5. Steuerungsanlage nach Anspruch 4, **dadurch gekennzeichnet, dass** sie ferner Abstellplatzempfänger (42) umfasst, um die relative Position der Verriegelungsvorrichtungen (12, 14) zu liefern, die innerhalb der Abstellplätze (66) identifiziert werden.

6. Steuerungsanlage nach Anspruch 4 oder 5, **dadurch gekennzeichnet, dass** sie ein Lagergestell (58) umfasst, das sich in der Nähe des Abtransportausgangs (50) befindet, wobei die Vielzahl von Abstellplätzen (66) innerhalb des Lagergestells (58) ausgebildet ist.

7. Steuerungsanlage nach einem der Ansprüche 4 bis 6, **dadurch gekennzeichnet, dass** sie ferner Behälter (60, 62, 64) umfasst, und dass die geordneten Abstellplätze (66) in den Behältern (60, 62, 64) eingerichtet sind.

8. Steuerungsanlage nach einem der Ansprüche 1 bis 7, **dadurch gekennzeichnet, dass** die Verriegelungsvorrichtungen (12, 14) jeweils ein Behältnis (12) umfassen, das eine Öffnung aufweist, die zur Aufnahme eines Gepäckstücks (10) geeignet ist, und ein Sperrelement (14), um die Öffnung versperren zu können.

9. Steuerungsanlage nach Anspruch 8, **dadurch gekennzeichnet, dass** der Steuerungssender im Sperrelement (14) untergebracht ist.

10. Steuerungsanlage nach Anspruch 8 oder 9, **dadurch gekennzeichnet, dass** das Behältnis (12) eine druckentlastete, dichte, doppelwandige Hülle aufweist, während der Steuerungssender ferner angepasst ist, um ein Drucksignal an die Steuerungsempfänger (34) zu liefern, wenn der Druck der doppelwandigen Hülle zunimmt.

## Claims

1. Control installation (10) for luggage transfer in a transfer space (32) for air transport, comprising said transfer space (32), this one having a reception inlet (48) intended to receive a plurality of luggages and an evacuation outlet (50) to evacuate said plurality of luggages, said installation further comprising a plurality of locking devices (12, 14), each one of said locking devices being able to be fitted on one luggage (10) from said plurality of luggages in order to keep locked each one of said luggages when said luggages are received at said reception inlet (48),
**characterized in that** each one of said locking devices (12, 14) comprises a control transmitter intended to transmit an identification signal (36) and an unlocking signal (38) when said locking device (12, 14) is unlocked, while said transfer space (32) comprises control receivers(34) intended to receive, on the one hand, said identification signal (36) in order to provide the position of the locking device within said transfer space (32), and, on the other hand, said unlocking signal (38).

2. Control installation according to claim 1, **characterized in that** it further comprises, a trigger transmitter (30) located at said reception inlet (48) intended to transmit an activation signal (28) of said control transmitter of each one of said locking devices (12, 14).

3. Control installation according to claim 2, **characterized in that** said trigger transmitter (30) is ready to further transmit a loading signal (33) representative of said identification signal (36).

4. Control installation according to any one of claims 1 to 3, **characterized in that** it further comprises a plurality of ordered locations (66) located in the vicinity of said evacuation outlet (50), each location being intended to receive a luggage (10) provided with a locking device (12, 14).

5. Control installation according to claim 4, **characterized in that** it further comprises location receivers (42) intended to provide the relative position of said locking devices (12, 14) identified within said locations (66).

6. Control installation according to claim 4 or 5, **characterized in that** it comprises a storage frame (58) located in the vicinity of said evacuation outlet (50), said plurality of locations (66) being formed within said storage frame (58).

7. Control installation according to any one of claims 4 to 6, **characterized in that** it further comprises containers (60, 62, 64), and **in that** said ordered locations (66) are arranged within said containers (60, 62, 64).

8. Control installation according to any one of claims 1 to 7, **characterized in that** said locking devices (12, 14) comprises each one a holder (12) having an opening intended to receive a luggage (10), and a bolt member (14) intended to bolt said opening.

9. Control installation according to claim 8, **characterized in that** said control transmitter is housed into said bolt member (14).

10. Control installation according to claim 8 or 9, **characterized in that** said holder (12) is provided with a under-pressurized, tight double-walled envelope, while said control transmitter is further adapted to provide a pressure signal to said control receivers (34) when the pressure of said double-walled envelope increases.
